# EUROPÄISCHE PATENTSCHRIFT

(11) **EP 2 495 135 B1**
(45) Veröffentlichungstag und Bekanntmachung des Hinweises auf die Patenterteilung: **06.04.2016**
(21) Anmeldenummer: 12152979.6
(22) Anmeldetag: 30.01.2012
(51) Int. Cl.: B60R 21/20

(54) **Belastungs- und gewichtsoptimiertes Airbaggehäuse**
Load and weight optimised air-bag housing
Boîtier d'airbag à charge et poids optimisés

(30) Priorität: 04.03.2011 DE 102011005080
(43) Veröffentlichungstag der Anmeldung: 05.09.2012
(73) Patentinhaber: ZF Friedrichshafen AG, 88038 Friedrichshafen (DE)
(72) Erfinder: Fangmann, Thomas, 49413 Dinklage (DE); Wagnener, Kait, 49143 Bissendorf (DE); Imken, Hans-Jürgen, 49163 Bohmte (DE)

(56) Entgegenhaltungen:
- EP-A1- 1 686 020
- DE-A1-102004 006 845
- DE-A1-102007 006 571
- DE-A1-102007 063 476
- DE-A1-102008 010 859
- DE-A1-102008 028 483
- DE-A1-102009 021 278
- US-A1- 2002 175 443

## Beschreibung

Die Erfindung betrifft ein Gehäuse für einen aufblasbaren Airbag in einem Kraftfahrzeug, gemäß dem Oberbegriff des Patentanspruchs 1.

Leergewichte von Kraftfahrzeugen haben in den vergangenen Jahren zugenommen. Die Ursachen hierfür liegen einerseits in den zunehmenden Kraftfahrzeug-Basisausstattungen, womit hauptsächlich den Komfortansprüchen der Käufer entsprochen wird. Zum anderen haben die gestiegenen Anforderungen an das dynamische Fahrverhalten zu leistungsstärkeren Motoren, Bremsen und Servolenkungen sowie zum Einbau von Fahrzeug-Zusatzfunktionen wie ABS, ESP usw. geführt, die ebenfalls zur Erhöhung der Kraftfahrzeugmasse beitragen. Darüber hinaus wurden aufgrund des steigenden Sicherheitsbewusstseins diverse Sicherheitseinrichtungen entwickelt, die mittlerweile zur Serienausstattung von vielen Kraftfahrzeugen gehören.

In diesem Zusammenhang ist auch die zunehmende Zahl der Airbags zu nennen, die - insbesondere aufgrund der für einen Airbag jeweils notwendigen Gehäusestruktur - einen nicht unerheblichen Einfluss auf das Leergewicht des Kraftfahrzeuges haben.

Gehäuse für Kraftfahrzeugairbags bestehen im Allgemeinen aus einem Behälter, in dem ein Gasgenerator sowie ein gefalteter Luftsack enthalten sind. Gattungsgemäße Airbag-Gehäuse sind häufig aus Metall, insbesondere aus umgeformten Blechteilen, oder aus stranggepresstem Leichtmetall hergestellt. Auch sind Airbaggehäuse aus Leichtmetalldruckguss oder Kunststoffspritzguss bekannt.

Bedingt durch die jeweiligen Fertigungsverfahren weisen alle derartigen bekannten Gehäuse - selbst in den bisherigen Leichtbauausführungen - auch in gar nicht oder nur gering belasteten Gehäusebereichen grundsätzlich Mindestwandstärken auf, die zu entsprechenden Bauteilgewichten führen. Andererseits werden gerade Airbaggehäuse in bestimmten Bereichen des Gehäuses durch besonders hohe Lasten mechanisch beansprucht, die bei der Auslösung des Airbags aufgrund der in diesem Fall mit hohem Druck expandierenden Verbrennungsgase des Gasgenerators auftreten. Dies bedeutet, dass Airbaggehäuse in den verschiedenen Gehäusebereichen besonders stark, teilweise um Größenordnungen voneinander differierenden Belastungen ausgesetzt sind.

Im Stand der Technik, beispielsweise in der DE 43 38 666 A1, ist versucht worden, dieser Problematik dahingehend zu begegnen, dass Airbaggehäuse mit ausgedehnten Verrippungen über weite Teile des Gehäuses, insbesondere in den hochbelasteten Bereichen, versehen worden sind. Derartige GehäuseVerrippungen sind jedoch tendenziell aufwändig in der Fertigung, und benötigen aufgrund der damit verbundenen Erhöhung der effektiven Wandstärke der verrippten Gehäusebereiche zusätzlichen Bauraum in Querrichtung zur Gehäuseoberfläche.

Weiterhin sei verwiesen auf DE 10 2009 021 278 A1. Aus dieser Schrift ist ein Airbaggehäuse bekannt, dessen Außenwandung aus stoffschlüssig verbundenen Materialien unterschiedlicher Eigenschaften besteht. Dies erfolgt indem ein Zusatzmaterial mit höherer Stabilität - im Sinne einer Armierung - in ein Grundmaterial niedrigerer Stabilität (polymerer Kunststoff)eingebettet ist. Auch diese Struktur ist fertigungstechnisch als aufwändig anzusehen.

Insbesondere bei der Verwendung von Kunststoffen zur Herstellung von spritzgegossenen Airbaggehäusen ist zudem auch die Effektivität einer verrippten Ausführung von Gehäusebereichen - in Bezug auf die erwünschte Material- und Gewichtseinsparung einerseits, und Kraftaufnahmefähigkeit in hochbelasteten Bereichen andererseits - aufgrund des vergleichsweise niedrigen Elastizitätsmoduls von Kunststoffen grundsätzlich begrenzt. Zudem benötigen die aus dem Stand der Technik bekannten Kunststoff-Airbaggehäuse aufgrund der begrenzten Belastbarkeit von Kunststoffen zumeist noch eine innere Hülle für den Gasgenerator, welche beim Stand der Technik zumindest teilweise aus Metall besteht, um den hohen Gasdrücken bei der Aktivierung des Airbags widerstehen zu können.

Mit diesem Hintergrund ist es somit Aufgabe der vorliegenden Erfindung, ein Airbaggehäuse zu schaffen, mit dem die genannten, im Stand der Technik vorhandenen Einschränkungen überwunden werden. Mit der Erfindung sollen dabei kostengünstig herstellbare Airbaggehäuse geschaffen werden, die mit wenigen Bauteilen und vergleichsweise geringer Masse ausgeführt werden können, und die somit das Leergewicht eines Kraftfahrzeugs, in welches sie eingebaut werden, nur unwesentlich erhöhen. Insbesondere soll die Erfindung ermöglichen, Airbaggehäuse darzustellen, bei denen die Steifigkeiten und Widerstandsfähigkeiten der unterschiedlichen Gehäusebereiche jeweils möglichst genau an die zu erwartenden, sehr unterschiedlichen spezifischen Belastungen in den jeweiligen Gehäusebereichen angepasst werden können.

Diese Aufgabe wird durch ein Airbaggehäuse mit den Merkmalen des Patentanspruchs 1 gelöst.

Bevorzugte Ausführungsformen sind Gegenstand der Unteransprüche.

In für sich genommen zunächst bekannter Weise umfasst das Airbaggehäuse gemäß der vorliegenden Erfindung eine Generatorkammer und eine Luftsackkammer. Dabei ist in der Generatorkammer ein Gasgenerator und in der Luftsackkammer ein gefalteter, aufblasbarer Luftsack aufnehmbar, wobei Generatorkammer und Luftsackkammer als integrierte Baugruppe ausgebildet sind.

Erfindungsgemäß zeichnet sich das Airbaggehäuse jedoch dadurch aus, dass das Airbaggehäuse zwei Spritzgussbereiche und einen dazwischen angeordneten Plattenbereich aufweist. Der Plattenbereich und die Spritzgussbereiche sind dabei endseitig in jeweiligen Übergangsbereichen durch Hinterspritzung oder Umspritzung miteinander so verbunden, dass sich eine flächige haft- und/oder formschlüssige Verbindung miteinander ergibt.

Auf diese Weise wird dank der Erfindung der Vorteil erzielt, dass das Airbaggehäuse in den unterschiedlichen Gehäusebereichen jeweils exakt im Hinblick auf die zu erwartenden maximalen Belastungen ausgelegt werden kann, indem insbesondere die durch den Gasdruck stark beaufschlagten Gehäusebereiche als Plattenbereiche ausgeführt werden, während geringer belastete Gehäusebereiche, zum Beispiel Gehäuseanschluss- bzw. Verbindungsbereiche oder sonstige periphere Bereiche des Airbaggehäuses als Spritzgussbereiche ausgebildet sind.

Dabei ist das Airbaggehäuse jedoch nach wie vor als integrierte Baugruppe ausgebildet, indem Plattenbereiche und Spritzgussbereiche bereits bei der Urformung flächig haft- und/oder formschlüssig miteinander verbunden werden dadurch, dass der zumindest eine Plattenbereich durch den Kunststoff des zumindest einen Spritzgussbereichs bei der Urformung hinterspritzt oder umspritzt wird. Auf diese Weise ergeben sich niedrige Taktzyklen und geringe Kosten bei der Herstellung sowie Vereinfachungen bei Handhabung und Montage des Airbaggehäuses. Falls ein Plattenbereich aus einem warmformbaren faserverstärkten Plattenhalbzeug besteht, so kann das Plattenhalbzeug nicht nur hinterspritzt oder umspritzt, sondern auch durchspritzt werden, da der Spritzfluss des Kunststoffs beim Spritzgießen das aufgeweichte faserverstärkte Plattenhalbzeug - bzw. die darin enthaltenen Faserverstärkungen - während des Spritzgussprozesses auch durchdringen kann.

Die Erfindung wird dabei jedoch zunächst einmal unabhängig davon verwirklicht, aus welchem Material der zumindest eine Plattenbereich ausgebildet ist, solange das verwendete Blech die erforderliche Festigkeit bzw. Versteifungswirkung für das Airbaggehäuse aufweist.

Erfindungsgemäß ist weiterhin vorgesehen, dass der Plattenbereich die hochbeanspruchten Abschnitte bzw. Bereiche des Airbaggehäuses bildet, während der Spritzgussbereich die wesentlichen Verbindungseinrichtungen und/oder Anbindungspunkte des Airbaggehäuses einstückig umfassen.

Diese Ausbildung besitzt den Hintergrund, dass durch Spritzguss gebildete Bereiche des Airbaggehäuses kaum Beschränkungen in der Gestaltung und Formgebung unterliegen, weshalb Verbindungseinrichtungen oder Anbindungspunkte zur Verbindung des Airbaggehäuses mit Anschlussbaugruppen (mit entsprechendem Vorteil bezüglich Kosten und Bauteilanzahl) einstückig im Spritzgussbereich des Airbaggehäuses vorgesehen und bei der Urformung mit an- bzw. eingeformt werden können. Die weniger frei formbaren, da im Wesentlichen mit konstanter Wandstärke flächig ausgebildeten Plattenbereiche des Airbaggehäuses hingegen bilden - im Sinne einer Aufgabenspezialisierung - die hochbelasteten Bereiche des Airbaggehäuses.

Gemäß einer besonders bevorzugten Ausführungsform der Erfindung umfasst der zumindest einen Plattenbereich des Airbaggehäuses jedoch einen Zuschnitt aus einem (warmformbaren) plattenförmigen Kunststoffhalbzeug mit Langfaser- oder Endlosfaserverstärkung. Ein Beispiel für ein derartiges faserverstärktes Kunststoffhalbzeug ist ein Sheet Molding Compound, also ein faserverstärktes plattenförmiges Halbzeug mit einer Kunststoffmatrix. Vorzugsweise handelt es sich bei dem Kunststoffhalbzeug um ein endlosfaserverstärktes thermoplastisches Plattenhalbzeug.

Plattenförmige Kunststoffhalbzeuge mit Endlosfaserverstärkung weisen üblicherweise eine Matrix aus thermoplastischem Kunststoff auf, und können (nach Erwärmung) daher ähnlich wie metallisches Blech tiefgezogen werden. Die aus derartigen endlosfaserverstärkten thermoplastischen Halbzeuge gefertigten Bauteile erreichen - bei geeigneter Bauteilauslegung - ähnliche Steifigkeiten und ähnliche Belastbarkeiten wie entsprechende metallische Bauteile, weisen dabei jedoch eine zumeist erheblich geringere Masse als letztere auf.

Die Verwendung von endlosfaserverstärkten thermoplastischen Halbzeugen für die besonders belasteten Bereiche eines Airbaggehäuses hat (neben der Gewichtsersparnis und der hohen Belastbarkeit der auf diese Weise verstärkten Gehäusebereiche) den zusätzlichen Vorteil, dass sich die aus endlosfaserverstärktem thermoplastischem Plattenhalbzeug gefertigten Gehäusebereiche und die im Spritzguss gefertigten Gehäusebereiche bei der Urformung - bzw. bei der gegenseitigen Hinterspritzung oder Durchspritzung - besonders innig miteinander verbinden, da beide auf einem organischen Matrixwerkstoff in Form von thermoplastischem Kunststoff basieren.

Eine weitere mögliche Ausführungsform der Erfindung sieht vor, dass zumindest ein Plattenbereich einen metallischen Blechzuschnitt umfasst. Gemäß einer weiteren bevorzugten Ausführungsform der Erfindung ist der zumindest eine Plattenbereich dreidimensional gekrümmt bzw. im Wesentlichen sphärisch geformt ausgebildet. Dies bedeutet mit anderen Worten, dass der Plattenbereich weder flach noch lediglich entlang einer Richtung gekrümmt ist, sondern dass der Plattenbereich entlang zweier voneinander verschiedener Richtungen gekrümmt bzw. tiefgezogen ist. Auf diese Weise werden noch höhere Steifigkeiten insbesondere für den Plattenbereich des Airbaggehäuses erreicht. Eine dreidimensionale bzw. im Wesentlichen sphärische Verformung des Plattenbereichs ist dabei insbesondere auch beim Einsatz von endlosfaserverstärktem Plattenhalbzeug möglich, da dieses sich bei entsprechender Erwärmung auch dreidimensional bzw. sphärisch tiefziehen lässt.

Auf diese Weise lässt sich ein besonders massearmes Airbaggehäuse darstellen, welches spezifisch nur in den hochbelasteten Abschnitten entsprechende Zuschnitte bzw. insbesondere aus endlosfaserverstärktem thermoplastischem Plattenhalbzeug gefertigte Gehäusebereiche aufweist.

Im Folgenden wird die Erfindung anhand lediglich Ausführungsbeispiele darstellender Zeichnungen erläutert. Dabei zeigt:
- Fig. 1: in isometrischer Darstellung ein Airbaggehäuse gemäß einer Ausführungsform der Erfindung in einer schrägen Aufsicht;
- Fig. 2: in einer Fig. 1 entsprechenden Darstellung das Airbaggehäuse gemäß Fig. 1 in einer schrägen Untersicht; und

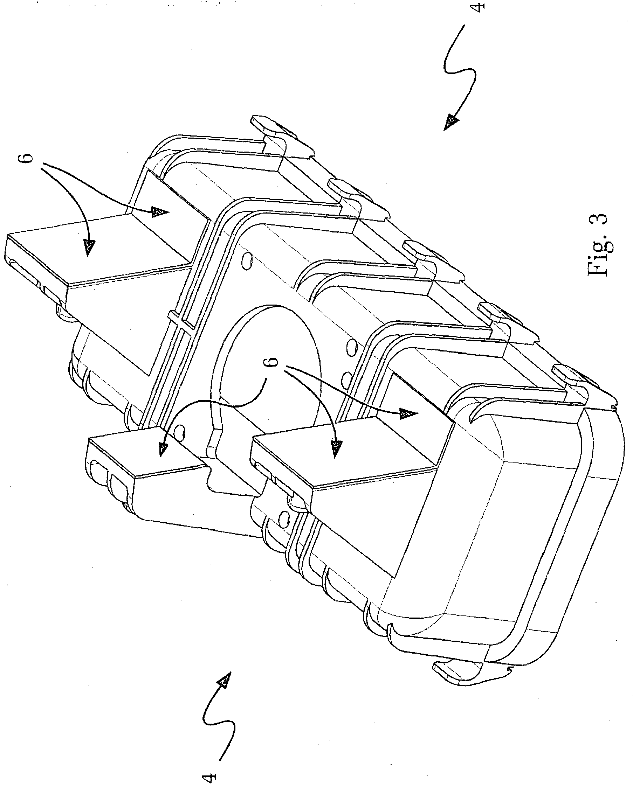

- Fig. 3: in einer Fig. 1 und 2 entsprechenden Darstellung eine Gehäusehälfte gemäß einer weiteren Ausführungsform der Erfindung.

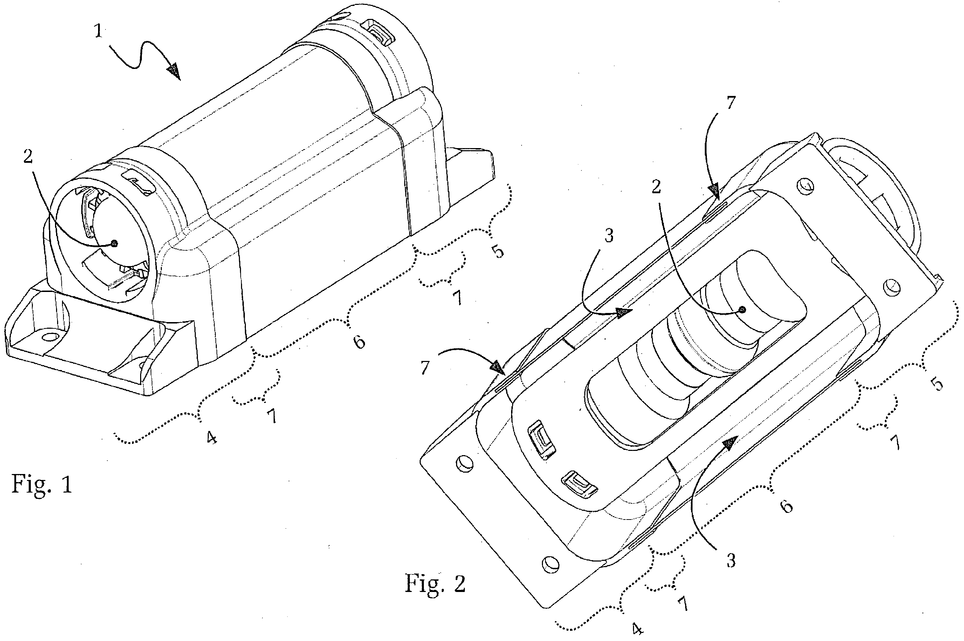

Fig. 1 und 2 zeigen ein erfindungsgemäßes Airbaggehäuse mit einer Generatorkammer 1, in der ein Gasgenerator 2 angeordnet ist, sowie mit einer Luftsackkammer 3, in der ein gefalteter, aufblasbarer Luftsack angeordnet werden kann, der in den Darstellungen der Figuren der besseren Erkennbarkeit halber weggelassen ist.

Man erkennt, dass Generatorkammer 1 und Luftsackkammer 3 als integrierte, im Wesentlichen einstückige Baugruppe ausgebildet sind, wobei das Airbaggehäuse ferner erfindungsgemäß Spritzgussbereiche 4, 5 sowie einen Plattenbereich 6 aufweist. Dabei sind die Spritzgussbereiche 4, 5 und der Plattenbereich 6 in jeweiligen Übergangsbereichen 7 durch Hinterspritzung bzw. Umspritzung und/oder Durchspritzung miteinander so verbunden, dass sich eine flächige haft- und/oder formschlüssige Verbindung des Plattenbereichs 6 und der Spritzgussbereiche 4, 5 ergibt.

Auf diese Weise wird mit der Erfindung erreicht, dass das Airbaggehäuse in den unterschiedlichen Gehäusebereichen jeweils im Hinblick auf die zu erwartenden maximalen Belastungen ausgelegt werden kann, indem insbesondere die durch den Gasdruck stark beaufschlagten Gehäusebereiche als Plattenbereiche 6 ausgeführt werden, während geringer belastete Gehäusebereiche, insbesondere Gehäuseanschluss- bzw. Verbindungsbereiche oder sonstige periphere Bereiche des Airbaggehäuses als Spritzgussbereiche 4, 5 ausgebildet sind.

Dabei ist das Airbaggehäuse jedoch unverändert als integrierte Baugruppe im Wesentlichen einstückig ausgebildet, indem die Plattenbereiche 6 und die Spritzgussbereiche 4, 5 bereits bei der Urformung miteinander verbunden werden dadurch, dass die Ränder des Plattenbereichs 6 durch den Kunststoff der Spritzgussbereiche 4, 5 bei der Urformung hinterspritzt oder umspritzt wird.

Da ein Airbaggehäuse im Einsatzfall einer hochdynamischen Belastung unterliegt, welche jedoch nur partielle Bereiche des Gehäuses betrifft, müsste diese Belastung bei konventioneller, im Wesentlichen nur einen Werkstoff umfassenden Bauweise des Airbaggehäuses mittels entsprechender, verhältnismäßig großer Wandstärkenunterschiede bzw. starker Verrippungen des Gehäuses aufgefangen werden. Hiermit sind beim Stand der Technik jedoch - in Abhängigkeit des Designs, des Herstellungsverfahrens und des verwendeten Werkstoffs - entsprechend hohe Bauteilgewichte und ggf. auch erheblicher Platzbedarf aufgrund der großen Wandstärken bzw. Verrippungen verbunden.

Diese Problematik wird dank der Erfindung überwunden, indem die hochbelasteten Gehäusebereiche - wie in Fig. 1 und 2 dargestellt - als Plattenbereiche 6 ausgeführt sind, während sonstige formgebende bzw. gering beanspruchte Bereiche, die Befestigungsfunktionen des Airbaggehäuses bzw. der Anschluss an Nachbarbaugruppen im Kraftfahrzeug durch die Spritzgussbereiche 4, 5 gebildet sind.

Die Plattenbereiche 6 können dabei insbesondere auch in nicht metallischem Blech, beispielsweise aus endlosfaserverstärktem thermoplastischem Plattenhalbzeug ausgeführt sein. Derartige endlosfaserverstärkte Plattenhalbzeuge mit thermoplastischer Kunststoffmatrix können bei Erwärmung verformt oder sogar - ähnlich wie metallisches Blech - tiefgezogen werden. Auf diese Weise gefertigte Bauteile erreichen aufgrund der Faserverstärkung ähnliche Steifigkeiten und eine ähnliche Belastbarkeit wie Bauteile aus metallischen Blechen, wobei endlosfaserverstärkte thermoplastische Plattenhalbzeuge jedoch ein erheblich niedrigeres spezifisches Gewicht als metallische Bleche aufweisen.

Zudem ergibt sich bei der Verwendung von endlosfaserverstärkten, thermoplastischen Plattenhalbzeugen für eine aus Spritzgussbereichen 4, 5 und Plattenbereichen 6 bestehende Airbaggehäuse-Konstruktion der Vorteil, dass sich Plattenbereiche 6 und Spritzgussbereiche 4, 5 in den jeweiligen Übergangsbereichen 7 (bei der Umspritzung, Hinterspritzung oder Durchspritzung der jeweiligen Ränder des endlosfaserverstärkten Plattenhalbzeugs 6) haft- und/oder stoffschlüssig miteinander verbinden können, wenn für Plattenbereiche 6 und Spritzgussbereiche 4, 5 thermoplastische Materialien mit jeweils ähnlichem oder identischem Matrixwerkstoff verwendet werden.

Im Ergebnis wird somit deutlich, dass mit der Erfindung ein Airbaggehäuse geschaffen wird, das kostengünstig herstellbar ist und eine minimale Anzahl an Bauteilen sowie eine sehr geringe Masse aufweist, wobei gleichzeitig hohe Anforderungen an die Betriebssicherheit und Steifigkeit erfüllt werden. Mit der Erfindung lassen sich Airbaggehäuse realisieren, bei denen die Gehäusesteifigkeiten optimal an die in den jeweiligen Gehäusebereichen vorherrschenden Belastungen angepasst werden können auch dann, wenn die Belastungen in den verschiedenen Gehäusebereichen stark unterschiedliche Größenordnungen aufweisen. Die im Stand der Technik ansonsten notwendigen Wandstärkensprünge bzw. Gehäuseverrippungen, die tendenziell aufwändig in der Fertigung sind und oftmals - aufgrund der damit verbundenen erheblichen Wandstärkenunterschiede - auch zusätzlichen Bauraum benötigen, können entfallen.

### Bezugszeichenliste

- 1: Generatorkammer
- 2: Gasgenerator
- 3: Luftsackkammer
- 4, 5: Spritzgussbereich
- 6: Plattenbereich, faserverstärktes Plattenhalbzeug
- 7: Übergangsbereich, Hinterspritzungsbereich
- 8: Vertikalverstellung, Vertikalverstellrichtung

## Patentansprüche

1. Airbaggehäuse mit einer Generatorkammer (1), in der ein Gasgenerator (2) aufnehmbar ist, und einer Luftsackkammer (3), in der ein gefalteter, aufblasbarer Luftsack aufnehmbar ist, wobei Generatorkammer (1) und Luftsackkammer (3) als integrierte Baugruppe ausgebildet sind, **dadurch gekennzeichnet, dass** das Airbaggehäuse zwei Spritzgussbereiche (4, 5) und einen dazwischen angeordneten Plattenbereich (6) aufweist, wobei Plattenbereich (6) und Spritzgussbereiche (4, 5) endseitig in jeweiligen Übergangsbereichen (7) durch Hinterspritzung, Umspritzung oder Durchspritzung flächig haft- und/oder formschlüssig miteinander verbunden sind, wobei der Plattenbereich (6) die hochbeanspruchten Abschnitte des Airbaggehäuses bildet und wobei die Spritzgussbereiche (4, 5) die wesentlichen Verbindungseinrichtungen und/oder Anbindungspunkte des Airbaggehäuses einstückig umfassen.

2. Airbaggehäuse nach Anspruch 1, **dadurch gekennzeichnet, dass** zumindest ein Plattenbereich (6) einen Zuschnitt aus einem langfaserverstärkten oder endlosfaserverstärkten Plattenhalbzeug umfasst.

3. Airbaggehäuse nach Anspruch 1 oder 2,**dadurch gekennzeichnet, dass** zumindest ein Plattenbereich (6) einen Zuschnitt aus einem endlosfaserverstärkten thermoplastischen Plattenhalbzeug umfasst.

4. Airbaggehäuse nach einem der Ansprüche 1 bis 3, **dadurch gekennzeichnet, dass** zumindest ein Plattenbereich (6) einen metallischen Blechzuschnitt umfasst.

5. Airbaggehäuse nach einem der Ansprüche 1 bis 4, **dadurch gekennzeichnet, dass** der zumindest eine Plattenbereich dreidimensional oder im Wesentlichen sphärisch gekrümmt bzw. tiefgezogen ist.

## Claims

1. Airbag housing with a generator chamber (1), in which a gas generator (2) can be accommodated, and an airbag chamber (3), in which a folded, inflatable airbag can be accommodated, wherein the generator chamber (1) and the airbag chamber (3) are formed as an integrated subassembly, **characterized in that** the airbag housing has two injection-moulded areas (4, 5) and a sheet area (6) arranged in between, wherein the sheet area (6) and the injection-moulded areas (4, 5) are connected to one another face-to-face at the ends in a bonding and/or interlocking manner in respective transitional areas (7) by back-moulding, overmoulding or through-moulding, wherein the sheet area (6) forms the highly stressed portions of the airbag housing and wherein the injection-moulded areas (4, 5) integrally comprise the main connecting devices and/or attachment points of the airbag housing.

2. Airbag housing according to Claim 1, **characterized in that** at least one sheet area (6) comprises a blank of a long-fibre-reinforced or continuous-fibre-reinforced semifinished sheet.

3. Airbag housing according to Claim 1 or 2, **characterized in that** at least one sheet area (6) comprises a blank of a continuous-fibre-reinforced thermoplastic semifinished sheet.

4. Airbag housing according to one of Claims 1 to 3, **characterized in that** at least one sheet area (6) comprises a metal sheet blank.

5. Airbag housing according to one of Claims 1 to 4, **characterized in that** the at least one sheet area is three-dimensionally or substantially spherically curved or deep-drawn.

## Revendications

1. Boîtier d'airbag comprenant une chambre de générateur (1) dans laquelle peut être reçu un générateur de gaz (2) et une chambre de coussin d'air (3) dans laquelle un coussin d'air gonflable, plié, peut être reçu, la chambre de générateur (1) et la chambre de coussin d'air (3) étant réalisées sous forme de module intégré, **caractérisé en ce que** le boîtier d'airbag présente deux régions moulées par injection (4, 5) et une région de plaque (6) disposée entre elles, la région de plaque (6) et les régions moulées par injection (4, 5) étant connectées les unes aux autres du côté de l'extrémité dans des régions de transition respectives (7) par un moulage par l'arrière, un surmoulage ou un moulage traversant à plat par engagement par correspondance de formes et/ou par adhésion, la région de plaque (6) formant les portions hautement sollicitées du boîtier d'airbag et les régions moulées par injection (4, 5) comprenant d'une seule pièce les dispositifs de connexion essentiels et/ou les points de liaison essentiels du boîtier d'airbag.

2. Boîtier d'airbag selon la revendication 1, **caractérisé en ce qu'**au moins une région de plaque (6) comprend une pièce découpée constituée d'un produit semi-fini en forme de plaque renforcé par des fibres longues ou renforcé par des fibres sans fin.

3. Boîtier d'airbag selon la revendication 1 ou 2, **caractérisé en ce qu'**au moins une région de plaque (6) comprend une pièce découpée constituée d'un produit semi-fini en forme de plaque thermoplastique renforcé par des fibres sans fin.

4. Boîtier d'airbag selon l'une quelconque des revendications 1 à 3, **caractérisé en ce qu'**au moins une région de plaque (6) comprend une pièce découpée en tôle métallique.

5. Boîtier d'airbag selon l'une quelconque des revendications 1 à 4, **caractérisé en ce que** l'au moins une région de plaque présente une courbure tridimensionnelle ou essentiellement sphérique ou est emboutie profond.
